# EUROPEAN PATENT APPLICATION

(11) **EP 4 353 403 A1**
(43) Date of publication of application: **17.04.2024**
(21) Application number: 23202938.9
(22) Date of filing: 11.10.2023
(51) Int. Cl.: B23K 35/02, B23K 35/36, B23K 9/10, B23K 9/235

(54) **HIGH TEMPERATURE WELDING WIRE LUBRICANT FOR PREHEATED WELDING WIRE SYSTEM AND RELATED METHODS**

(30) Priority: 14.10.2022 US 202263416320 P; 06.10.2023 US 202318377543
(71) Applicant: Hobart Brothers LLC, Troy OH 45373 (US)
(72) Inventor: SNYDER, Jon Eric, Troy, 45373 (US); BUNDY, Joseph Clark, Troy, 45373 (US); ZWAYER, Jake Bradley, Troy, 45373 (US)
(74) Representative: HGF

(57) **Abstract**

The present disclosure is generally directed to a high temperature lubricant for use in a preheated welding wire system. The lubricant may comprise one or more high melting point materials in a concentration from 0.5 to 30 wt % by weight of the lubricant. The high melting point materials may comprise graphite, molybdenum disulfide, tungsten disulfide, or boron nitride. The lubricant is configured to remain on a welding wire electrode that has been coated with the lubricant without melting when a preheater heats the welding wire electrode to an elevated temperature (e.g., between 500 and 900 degrees Celsius). The lubricant may be a powder or a liquid. When the lubricant is a liquid, it may further comprise a solvent such as 2-proponal or water.

## Description

### CROSS-REFERENCE TO RELATED APPLICATION

This application claims benefit of priority from US Provisional Patent Application No. 63/416320, filed October 14, 2022, which is hereby incorporated by reference in its entirety herein.

### FIELD

The present disclosure relates generally to a high temperature lubricant for use in a preheated welding wire system.

### BACKGROUND

Welding is a process that has increasingly become ubiquitous in all industries. Welding is, at its core, simply a way of bonding two pieces of metal. A wide range of welding systems and welding control regimes have been implemented for various purposes. In continuous welding operations, metal inert gas (MIG) welding and submerged arc welding (SAW) techniques allow for formation of a continuing weld bead by feeding welding wire, shielded by inert gas or granular flux, from a welding torch. Such wire feeding systems are available for other welding systems, such as tungsten inert gas (TIG) welding. Electrical power is applied to the welding wire and a circuit is completed through the workpiece to sustain a welding arc that melts the electrode wire and the workpiece to form the desired weld.

Existing welding wire lubricants include lower melting point lubricants such as petroleum distillates, oils, soaps, waxes, or detergents. One example is sodium stearate. When used in a preheated welding wire system, these lower melting point lubricants are prone to melting in the preheat section, which can subsequently clog the welding gun and cause the welding wire to stop feeding or not feed properly. This can lead to downtime while the problem is corrected, which can cancel out some of the advantages of using a preheated welding wire system.

There exists a need for an improved high temperature lubricant for use in a preheated welding wire system.

### SUMMARY

The present disclosure relates generally to a high temperature lubricant for use in a preheated welding wire system, as well as related systems and methods.

According to an aspect of the present disclosure, a lubricant for coating a welding wire electrode to be used in a preheated welding wire system comprises one or more high melting point materials in a concentration from 0.5 to 30 wt % by weight of the lubricant. The one or more high melting point materials comprise graphite, molybdenum disulfide, tungsten disulfide, or boron nitride. The lubricant is configured to remain on a welding wire electrode that has been coated with the lubricant without melting when a preheater heats the welding wire electrode to between 500 and 900 degrees Celsius. The lubricant may be a powder or a liquid. When the lubricant is a liquid, the liquid may comprise a solvent, such as 2-proponal or water. The lubricant may comprise up to 5 wt % by weight of binders, dispersants, surfactants, or petroleum distillates. In such a lubricant, the binders may be cellulosic resins or thermoplastic resins.

According to another aspect of the present disclosure, a preheated welding wire system comprises a welding wire electrode and a preheater configured to heat the welding wire electrode to between 500 and 900 degrees Celsius. The welding wire electrode is coated in a high temperature lubricant to form a coating on an outer surface of the welding wire electrode. The coating is configured to remain on the welding wire electrode without melting when the preheater heats the welding wire electrode to between 500 and 900 degrees Celsius.

According to another aspect of the present disclosure, a method for manufacturing a lubricated welding wire electrode comprises the steps of: (a) forming a welding wire electrode; and (b) applying a high temperature lubricant to the welding wire electrode to form a coating on an outer surface of the welding wire electrode. The welding wire electrode may then be preheated to between 500 and 900 degrees Celsius and then used during welding. The coating is configured to remain on the welding wire electrode without melting when the welding wire electrode is preheated to between 500 and 900 degrees Celsius.

It is to be understood that both the foregoing general description and the following detailed description describe various embodiments and are intended to provide an overview or framework for understanding the nature and character of the claimed subject matter. The accompanying drawings are included to provide a further understanding of the various embodiments, and are incorporated into and constitute a part of this specification. The drawings illustrate the various embodiments described herein, and together with the description serve to explain the principles and operations of the claimed subject matter.

### BRIEF DESCRIPTION OF THE DRAWINGS

The following is a description of the examples depicted in the accompanying drawings. The figures are not necessarily to scale, and certain features and certain views of the figures may be exaggerated in scale or in schematic for clarity or conciseness.
FIG. 1 illustrates a block diagram of preheating and welding current paths in a conventional welding system using resistive preheating.
FIG. 2 illustrates a flow diagram of a method of forming and using a welding wire electrode coated with a high temperature lubricant.

The foregoing summary, as well as the following detailed description, will be better understood when read in conjunction with the figures. It should be understood that the claims are not limited to the arrangements and instrumentality shown in the figures. Furthermore, the appearance shown in the figures is one of many ornamental appearances that can be employed to achieve the stated functions of the apparatus.

### DETAILED DESCRIPTION

In the following detailed description, specific details may be set forth to provide a thorough understanding of the embodiments of the present disclosure. However, it will be clear to one skilled in the art when disclosed examples may be practiced without some or all of these specific details. For the sake of brevity, well-known features or processes may not be described in detail. In addition, like or identical reference numerals may be used to identify common or similar elements.

One or more specific embodiments of the present disclosure will be described below. In an effort to provide a concise description of these embodiments, all features with an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements.

As used herein, preheating refers to heating an electrode wire prior to a welding arc or deposition in the travel path of the electrode wire.

A preheated welding wire system may comprise a welding wire electrode and a preheater configured to heat the welding wire electrode to between 500 and 900 degrees Celsius. The system may be configured for high deposition rate welding processes. The welding wire electrode is coated in a high temperature lubricant to form a coating on an outer surface of the welding wire electrode. The coating is configured to remain on the welding wire electrode without melting when the preheater heats the welding wire electrode to between 500 and 900 degrees Celsius.

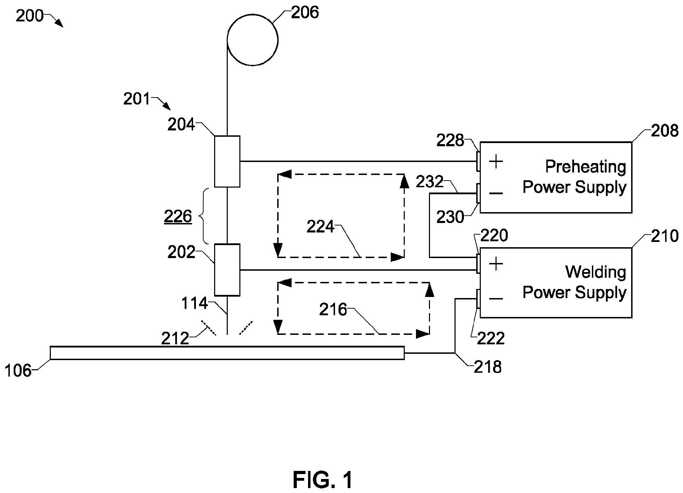

Figure 1 is a block diagram illustrating preheating and welding current paths in a conventional welding system 200 using resistive preheating. The conventional welding system 200 includes a weld torch 201 having a first contact tip 202 and a second contact tip 204. The system 200 further includes an electrode wire 114 fed from a wire spool 206, a preheating power supply 208, and a welding power supply 210. The system 200 is illustrated in operation as producing a welding arc 212 between the electrode wire 114 and a workpiece 106.

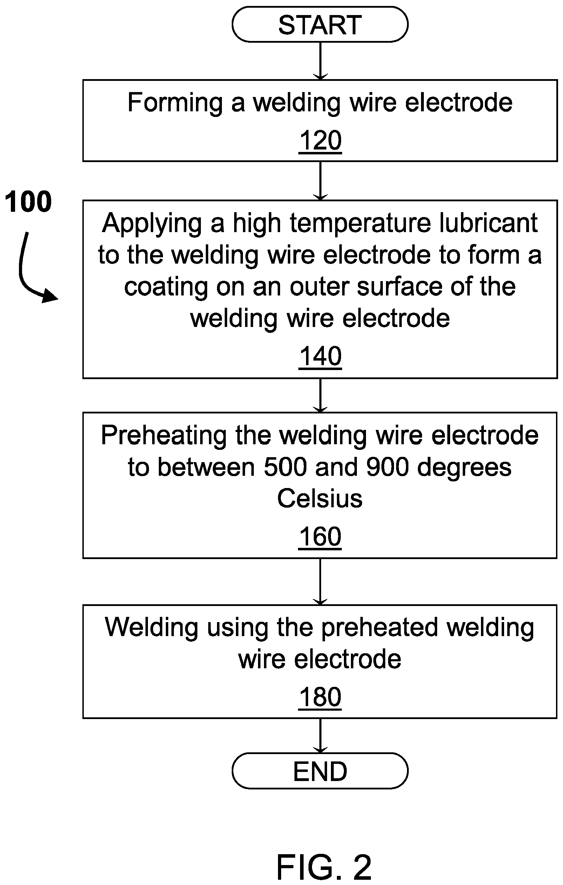

In operation, the electrode wire 114 passes from the wire spool 206 through the second contact tip 204 and the first contact tip 202, between which the preheating power supply 208 generates a preheating current to heat the electrode wire 114. Specifically, in the configuration shown in Figure 2A, the preheating current enters the electrode wire 114 via the second contact tip 204 and exits via the first contact tip 202. At the first contact tip 202, a welding current may also enter the electrode wire 114. The welding current is generated, or otherwise provided by, the welding power supply 210. The welding current exits the electrode wire 114 and returns via the workpiece 106. When the electrode wire 114 makes contact with a target metal workpiece 106, an electrical circuit is completed and the welding current flows through the electrode wire 114, across the metal work piece(s) 106, and returns to the welding power supply 210. The welding current causes the electrode wire 114 and the parent metal of the work piece(s) 106 in contact with the electrode wire 114 to melt, thereby joining the work pieces as the melt solidifies. By preheating the electrode wire 114, a welding arc 212 may be generated with reduced arc energy. Generally speaking, the preheating current is proportional to the distance between the contact tips 202, 204 and the electrode wire 114 size.

The welding current is generated, or otherwise provided by, a welding power supply 210, while the preheating current is generated, or otherwise provided by, the preheating power supply 208. The preheating power supply 208 and the welding power supply 210 may ultimately share a common power source (e.g., a common generator or line current connection), but the current from the common power source is converted, inverted, and/or regulated to yield the two separate currents - the preheating current and the welding current. For instance, the preheat operation may be facilitated with a single power source and associated converter circuitry, in which case three leads may extend from a single power source.

During operation, the system 200 establishes a welding circuit 214 to conduct welding current, which is illustrated by a weld current path 216. The weld current path 216 flows from the welding power supply 210 to the first contact tip 202 and returns to the welding power supply 210 via the welding arc 212, the workpiece 106, and a work lead 218. To enable connection between the welding power supply 210 and the first contact tip 202 and the workpiece 106, the welding power supply 210 includes terminals 220, 222 (e.g., a positive terminal and a negative terminal).

During operation, the preheating power supply establishes a preheating circuit to conduct preheating current, which is represented by a preheat current path 224 through a section 226 of the electrode wire 114. To enable connection between the preheating power supply 208 and the contact tips 202, 204, the preheating power supply 208 includes terminals 228, 230. The preheating current path 224 flows from the welding power supply 210 to the second contact tip 204, the section 226 of the electrode wire 114, the first contact tip 202, and returns to the preheating power supply 208 via a cable 232 connecting the terminal 220 of the welding power supply 210 to the terminal 230 of the preheating power supply 208.

Because the preheating current path 224 is superimposed with the welding current path 216 over the connection between the first contact tip 202 and the power supplies 208, 210, the cable 232 may enable a more cost-effective single connection between the first contact tip 202 and the power supplies 208, 210 (e.g., a single cable) than providing separate connections for the welding current to the first contact tip 202 and for the preheating current to the first contact tip 202.

The electrode wire 114 may be heated to a preheating temperature. This preheating temperature may be a range, for example 500 to 900, or 650 to 850, or 600 to 800, or 650 to 750, degrees Celsius.

Further details about preheated welding systems may be found in United States Patent Publication Nos. 2017/0165778 A1 and 2018 / 0354055 A1, and each of which are incorporated by reference herein.

FIG. 2 illustrates a method 100 for forming and using a welding wire electrode. This method involves forming 120 a welding wire electrode, then applying 140 a high temperature lubricant to the welding wire electrode to form a coating on an outer surface of the welding wire electrode. At this point, manufacturing of the welding wire electrode may be complete. To use the welding wire in a preheated welding system, one preheats 160 the welding wire electrode to between 500 and 900 degrees Celsius, before welding 180 using the welding wire electrode. The coating is configured to remain on the welding wire electrode without melting during the preheating step 160.

The welding wire electrode may comprise one or more high melting point materials. The one or more high melting point materials may be present in a concentration from 0.5 to 30 wt %, 1.0 to 25 wt %, 2.0 to 20 wt %, 3.0 to 15 wt %, or 5.0 to 10 wt % of the lubricant. The one or more high melting point materials may comprise graphite, molybdenum disulfide, tungsten disulfide, or boron nitride. Graphite, in particular, has advantages of a high melting point and being electrically conductive, which is an advantage in electric arc welding with welding wires. Graphite and molybdenum disulfide have high lubricity for tight tolerances of mating parts making each a high performing component in a lubricant for welding wire applications, particularly when evaluated over long times in high demand industrial applications. The lubricant can contain more than one high temperature high melting point material to optimize the design. Other high melting point materials that could be used as a lubricant are materials with melting points of 600 degrees Celsius or higher, or 900 degrees Celsius or higher particularly when the welding wire will be preheated to between 600 and 900 degrees Celsius.

The high melting point materials can allow for ultra-thin film coatings, especially when applied with liquid media. The coating may not always be a continuous coating but may instead be present on the welding wire electrode surface in streaks and patches. This tends to be acceptable and not harmful for its end-use. High melting point materials dissolved in liquid media have the advantage of precise and controllable coating amounts on the welding wire electrode surface using a variety of well-designed application systems. This may be helpful in achieving low or ultra-low levels of lubricant coating on the welding wire, which may be helpful in avoiding a build-up of lubricant in the welding gun.

High melting point materials dissolved in 2-propanol or other media with low flash points have a fast cure time, which can be an advantage in the manufacturing process of the welding wire. Low flash point media can also be an advantage in the manufacture of cored wires with longitudinal seams in that the media will evaporate if it gets in the core.

High melting point materials, sometimes also known as dry lubricants, have an additional advantage over other lubricants like stearates and oils that are typically used for welding wires. This additional advantage is that the high melting point materials do not contain hydrocarbons. Hydrocarbons can increase the diffusible hydrogen content of steel weld metal, which is undesirable.

The lubricant may be a powder or a liquid. When the lubricant is a powder, it may contain a single component or a mixture of powders. Even though binders, dispersants, and other additives in high temperature lubricant mixtures can be useful for obtaining a good uniform and adherent coatings on the welding wire, it is possible such additives are not needed to obtain a suitably performing welding wire with a high temperature lubricant coating for a preheat system. For example, a powder coating on the welding wire (with no liquid and no additives) may have adequate performance.

When the lubricant is a liquid, the liquid may comprise a solvent, such as 2-proponal or water. The lubricant may comprise up to 25 wt % of binders, dispersants, surfactants, or petroleum distillates. For example, the lubricant may comprise up to 5 wt % of a binder, up to 5 wt % of a dispersant, up to 5 wt % of a surfactant, and up to 5 wt % of a petroleum distillate. In a liquid lubricant, the binders may be cellulosic resins or thermoplastic resins. These additional additives, such as binders and dispersants, may help to obtain a good, uniform, and adherent coating on the welding wire electrode. Other solvents apart from 2-proponal or water could be used to apply a lubricant as a liquid. In such a scenario, a process such as baking may be used during the manufacturing process of the welding wire electrode to remove the solvent from the welding wire while allowing the high temperature lubricant to remain. In this method, the solvent is not a detriment when used to apply high temperature lubricants to welding wire electrodes used with the preheat system.

The binder, dispersants, and other additives are generally lower melting temperature materials (such as thermoplastic resins) and may be a disadvantage in a preheated welding system if their amounts are not kept to a minimum on the welding wire surface. For example, the binders, dispersants, surfactants, and petroleum distillates may be materials with melting points below 500 degrees Celsius. The minimization of the low melting temperature additives on the welding wire surface can be accomplished by reducing their concentration in the mixture, reducing the amount of the mixture applied to the welding wire, or by a baking the welding wire between approximately 400 to 600 degrees Celsius during the manufacturing process (after the high temperature lubricant dissolved in 2-propanol or other solvent with additives has been applied to the welding wire). It is also possible that the additives may not need to be added to the lubricant.

According to a further aspect of the present invention, it may be possible to use an extremely low melting lubricant or material that would harmlessly vaporize or liquefy in the preheat section of the welding gun so that it does not clog the welding gun.

According to a further aspect of the present invention, it may be possible to lubricate the mating parts of the welding gun so that the welding wire does not require a lubricant. In this case, a lubricant would be applied to the liner, insulator tube, contact tip, and other components of the welding gun.

The electrode may be metal cored, solid, or flux cored. A metal cored or flux cored electrode may be with or without a seam. The electrode may have an outer metal coating, such as a copper coating, or may not have an outer metal coating.

The various aspects and embodiments disclosed herein are not intended to be limiting. Other embodiments may be utilized, and other changes may be made, without departing from the spirit or scope of the subject matter presented herein. It will be readily understood that the aspects of the present disclosure, as generally described herein and illustrated in the figures, can be arranged, substituted, combined, separated, and designed in a wide variety of different configurations, all of which are contemplated herein.

Certain embodiments of the invention are described in the following numbered clauses:
Clause 1. A lubricant for coating a welding wire electrode to be used in a preheated welding wire system comprising:
   one or more high melting point materials in a concentration from 0.5 to 30 wt % by weight of the lubricant, wherein the one or more high melting point materials comprise graphite, molybdenum disulfide, tungsten disulfide, or boron nitride; and
   wherein the lubricant is configured to remain on a welding wire electrode that has been coated with the lubricant without melting when a preheater heats the welding wire electrode to between 500 and 900 degrees Celsius.
Clause 2. The lubricant of clause 1, wherein the lubricant is a powder.
Clause 3. The lubricant of clause 1, wherein the lubricant is a liquid.
Clause 4. The lubricant of clause 3, wherein the lubricant comprises, as a solvent, 2-proponal or water.
Clause 5. The lubricant of clause 4, wherein the lubricant further comprises up to 25 wt % by weight of one or more binders, dispersants, surfactants, or petroleum distillates.
Clause 6. The lubricant of clause 5, wherein the binders are cellulosic resins or thermoplastic resins.
Clause 7. A preheated welding wire system comprising:
   a welding wire electrode; and
   a preheater configured to heat the welding wire electrode to between 500 and 900 degrees Celsius;
   wherein the welding wire electrode is coated in a high temperature lubricant to form a coating on an outer surface of the welding wire electrode, and
   wherein the coating is configured to remain on the welding wire electrode without melting when the preheater heats the welding wire electrode to between 500 and 900 degrees Celsius.
Clause 8. The preheated welding wire system of clause 7, wherein the high temperature lubricant comprises one or more high melting point materials and wherein the one or more high melting point materials comprise graphite, molybdenum disulfide, tungsten disulfide, or boron nitride.
Clause 9. The preheated welding wire system of clause 7, wherein the high temperature lubricant is applied to the welding wire electrode as a powder.
Clause 10. The preheated welding wire system of clause 7, wherein the high temperature lubricant is applied to the welding wire electrode as a liquid.
Clause 11. The preheated welding wire system of clause 10, wherein the high temperature lubricant comprises, as a solvent, 2-proponal or water.
Clause 12. The preheated welding wire system of clause 10, wherein the concentration of the one or more high melting point materials in the high temperature lubricant ranges from 0.5 wt. % to 30 wt. %.
Clause 13. The preheated welding wire system of clause 10, wherein the high temperature lubricant further comprises up to 25 wt % of at least one binder, dispersant, surfactant, or petroleum distillate.
Clause 14. A method for manufacturing a lubricated welding wire electrode comprising the steps of:
   forming a welding wire electrode; and
   applying a high temperature lubricant to the welding wire electrode to form a coating on an outer surface of the welding wire electrode;
   wherein the coating is configured to remain on the welding wire electrode without melting when the welding wire electrode is preheated to between 500 and 900 degrees Celsius.
Clause 15. The method of clause 14, wherein the high temperature lubricant comprises one or more high melting point materials and wherein the one or more high melting point materials comprise graphite, molybdenum disulfide, tungsten disulfide, or boron nitride.
Clause 16. The method of clause 14, wherein the high temperature lubricant is applied to the welding wire electrode as a powder.
Clause 17. The method of clause 14, further comprising a step of suspending or dissolving the high temperature lubricant in a liquid before applying it to the welding wire electrode.
Clause 18. The method of clause 17, wherein the lubricant comprises, as a solvent, 2-proponal or water.
Clause 19. The method of clause 17, wherein the concentration of the one or more high melting point materials in the lubricant ranges from 0.5 wt. % to 30 wt. %.
Clause 20. The method of clause 17, wherein the lubricant further comprises up to 25 wt % of at least one binder, dispersant, surfactant, or petroleum distillate.

## Claims

1. A lubricant for coating a welding wire electrode to be used in a preheated welding wire system comprising:
one or more high melting point materials in a concentration from 0.5 to 30 wt % by weight of the lubricant, wherein the one or more high melting point materials comprise graphite, molybdenum disulfide, tungsten disulfide, or boron nitride; and
wherein the lubricant is configured to remain on a welding wire electrode that has been coated with the lubricant without melting when a preheater heats the welding wire electrode to between 500 and 900 degrees Celsius.

2. The lubricant of claim 1, wherein the lubricant is a powder.

3. The lubricant of claim 1, wherein the lubricant is a liquid.

4. The lubricant of claim 3, wherein the lubricant comprises, as a solvent, 2-proponal or water.

5. The lubricant of claim 4, wherein the lubricant further comprises up to 25 wt % by weight of one or more binders, dispersants, surfactants, or petroleum distillates, for example, wherein the binders are cellulosic resins or thermoplastic resins.

6. A preheated welding wire system comprising:
a welding wire electrode; and
a preheater configured to heat the welding wire electrode to between 500 and 900 degrees Celsius;
wherein the welding wire electrode is coated in a high temperature lubricant to form a coating on an outer surface of the welding wire electrode, and
wherein the coating is configured to remain on the welding wire electrode without melting when the preheater heats the welding wire electrode to between 500 and 900 degrees Celsius.

7. The preheated welding wire system of claim 6, wherein the high temperature lubricant comprises one or more high melting point materials and wherein the one or more high melting point materials comprise graphite, molybdenum disulfide, tungsten disulfide, or boron nitride.

8. The preheated welding wire system of claim 6, wherein the high temperature lubricant is applied to the welding wire electrode as a powder.

9. The preheated welding wire system of claim 6, wherein the high temperature lubricant is applied to the welding wire electrode as a liquid.

10. The preheated welding wire system of claim 9, wherein the high temperature lubricant comprises, as a solvent, 2-proponal or water, or wherein the concentration of the one or more high melting point materials in the high temperature lubricant ranges from 0.5 wt. % to 30 wt. %, or wherein the high temperature lubricant further comprises up to 25 wt % of at least one binder, dispersant, surfactant, or petroleum distillate.

11. A method for manufacturing a lubricated welding wire electrode comprising the steps of:
forming a welding wire electrode; and
applying a high temperature lubricant to the welding wire electrode to form a coating on an outer surface of the welding wire electrode;
wherein the coating is configured to remain on the welding wire electrode without melting when the welding wire electrode is preheated to between 500 and 900 degrees Celsius.

12. The method of claim 11, wherein the high temperature lubricant comprises one or more high melting point materials and wherein the one or more high melting point materials comprise graphite, molybdenum disulfide, tungsten disulfide, or boron nitride.

13. The method of claim 11, wherein the high temperature lubricant is applied to the welding wire electrode as a powder.

14. The method of claim 11, further comprising a step of suspending or dissolving the high temperature lubricant in a liquid before applying it to the welding wire electrode.

15. The method of claim 14, wherein the lubricant comprises, as a solvent, 2-proponal or water, or wherein the concentration of the one or more high melting point materials in the lubricant ranges from 0.5 wt. % to 30 wt. %, or wherein the lubricant further comprises up to 25 wt % of at least one binder, dispersant, surfactant, or petroleum distillate.
